# EUROPÄISCHE PATENTANMELDUNG

(11) **EP 1 714 766 A1**
(43) Veröffentlichungstag der Anmeldung: **25.10.2006**
(21) Anmeldenummer: 05008753.5
(22) Anmeldetag: 21.04.2005
(51) Int. Cl.: B29C 44/14

(54) **Karosserieanbauteil für ein Fahrzeug und Verfahren zum Herstellen eines Karosserieanbauteils**

(71) Anmelder: ArvinMeritor GmbH, 63128 Dietzenbach (DE)
(72) Erfinder: Ludwig, Matthias, 38159 Vechelde (DE); Niebuhr, Frank, 38518 Wilsche (DE); Batke, Harald, 38539 Müden/Aller (DE); Langhoff, Hans-Joachim, 38518 Gifhorn (DE); Niesner, Tobias, 28518 Gifhorn (DE); Hardel, Sven, 29386 Wettendorf (DE); Beck, Herbert, 38302 Wolfenbüttel (DE)
(74) Vertreter: Kitzhofer, Thomas

(57) **Zusammenfassung**

Ein Verfahren zum Herstellen eines Karosserieanbauteils, das eine, bezogen auf den an einem Fahrzeug montierten Zustand, Innenseite und eine entgegengesetzte, sichtbare Außenseite aufweist, wobei die Innenseite einen Flächenabschnitt hat, ist durch folgende Schritte gekennzeichnet: Zuerst wird eine Schäumform mit einer ersten und einer zweiten Werkzeugformhälfte bereitgestellt, wobei die Innenseite der ersten Werkzeugformhälfte und die Außenseite der zweiten Werkzeugformhälfte zugeordnet sind. Dann wird eine Schutzfolie (20) in die erste Werkzeugformhälfte wenigstens im Bereich des Flächenabschnitts eingelegt. Die Schutzfolie (20) wird hinterschäumt, so daß die Innenseite im Bereich des Flächenabschnitts von der Schutzfolie (20) gebildet wird. Die Schutzfolie (20) ist so mit der erzeugten Schäumschicht verbunden, daß sie zerstörungsfrei von dieser abziehbar ist. Ferner betrifft die Erfindung ein Karosserieanbauteil für ein Fahrzeug, insbesondere ein Dachmodul.

## Beschreibung

Die Erfindung betrifft ein Verfahren zum Herstellen eines Karosserieanbauteils und ferner ein Karosserieanbauteil für ein Fahrzeug.

Geschäumte Karosserieanbauteile, insbesondere mit einem glasfaserverstärkten PU-Material, sind bereits bekannt, wobei die Glasfasern beispielsweise im sogenannten LFI (Long Fibre Injection)-Verfahren in den Kunststoff eingeschossen werden. Eine tiefgezogene Folienaußenhaut, die aus Kunststoff oder Aluminium besteht, wird dabei in eine Schäumform eingelegt und hinterschäumt. Nach dem Ausschäumen des PU-Materials muß das Karosserieanbauteil aus der Schäumform entfernt werden, ohne daß Beschädigungen an diesem entstehen.

Um solche Beschädigungen zu vermeiden, sind Trennmittel bekannt, die vor dem Schäumvorgang auf die Schäumform, die der Außenhaut gegenüberliegt, aufgebracht werden, so daß ein problemloses Entfernen des geschäumten Karosserieanbauteils erfolgen kann. Diese Trennmittel werden üblicherweise aufgespritzt, was zu Verunreinigungen und Verschmutzungen der Anlage durch den Sprühnebel führt.

Aufgrund des Einsatzes von Trennmitteln müssen die Karosserieanbauteile auch vor dem Anbringen an dem Fahrzeugrahmen an vorgesehenen Klebeflächen gereinigt werden, um eine Haftung eines Klebers zu gewährleisten. Bei einem als Dachmodul ausgebildeten Karosserieanbauteils befinden sich die Klebeflächen dabei beispielsweise an den seitlichen Rändern des Dachmoduls.

Die Aufgabe der Erfindung besteht darin, ein Karosserieanbauteil bereitzustellen, das kostengünstig und einfach herzustellen ist.

Dies wird durch ein erfindungsgemäßes Verfahren zum Herstellen eines Karosserieanbauteils erreicht, mit einer, bezogen auf den an einem Fahrzeug montierten Zustand, Innenseite und einer entgegengesetzten, sichtbaren Außenseite, wobei die Innenseite einen Flächenabschnitt hat, das durch folgende Schritte gekennzeichnet ist:
- es wird eine Schäumform mit einer ersten und einer zweiten Werkzeugformhälfte bereitgestellt, wobei die Innenseite der ersten Werkzeugformhälfte und die Außenseite der zweiten Werkzeugformhälfte zugeordnet sind,
- es wird eine Schutzfolie in die erste Werkzeugformhälfte wenigstens im Bereich des Flächenabschnitts eingelegt, und
- die Schutzfolie wird hinterschäumt, so daß die Innenseite im Bereich des Flächenabschnitts von der Schutzfolie gebildet wird, wobei die Schutzfolie so mit der Schäumschicht verbunden ist, daß sie zerstörungsfrei von dieser abziehbar ist.

Die Schutzfolie, die die Innenseite im Bereich des Flächenabschnitts bildet und somit abdeckt, schützt diese vor Verunreinigungen wie Staub und Trennmittel. Solche Verunreinigungen können unter anderem beim Transport des fertiggestellten Karosserieanbauteils zu einem Automobilhersteller erfolgen. Aufgrund der Schutzfolie kann das Karosserieanbauteil problemlos an den Automobilhersteller ausgeliefert werden. Dieser kann das Karosserieanbauteil ohne vorheriges Reinigen der Flächenabschnitte, die beispielsweise Klebeflächen sein können, das z. B. beim Einsatz von Trennmitteln erforderlich war, an dem Fahrzeug anbringen, indem die Schutzfolie zerstörungsfrei von der Schäumschicht abgezogen wird. Zerstörungsfrei bedeutet, daß die Schäumschicht beim Abziehen nicht oberflächlich an der Schutzfolie haftet, so daß die gewünschte glatte Schäumschichtoberfläche verbleibt.

Vorzugsweise wird vor dem Einlegen der Schutzfolie kein Trennmittel auf die erste Werkzeugformhälfte aufgebracht. Die Schutzfolie ermöglicht ein problemloses Entfernen des geschäumten Karosserieanbauteils aus der Schäumform, so daß ein Aufbringen des Trennmittels entfällt und damit verbunden ein Reinigen der Schäumform und deren Umgebung.

Beim Schäumvorgang wird bevorzugt eine Schäumschicht erzeugt, wobei die Schutzfolie die gesamte Schäumschicht der ersten Werkzeugformhälfte innenseitig abdeckt. So muß im gesamten Bereich der ersten Werkzeugformhälfte kein Trennmittel aufgebracht werden, wodurch der Herstellungsprozeß vereinfacht und dadurch verbilligt wird.

Die erste Werkzeugformhälfte kann Bohrungen aufweisen, die mit einer Pumpe gekoppelt sind, mittels der ein Vakuum aufgebracht werden kann. Die dehnbare Schutzfolie schmiegt sich beim Betätigen der Pumpe und einem entstehenden Vakuum an die Kontur der ersten Werkzeugformhälfte an, so daß das Karosserieanbauteil nach dem Schäumvorgang eine gewünschte, der ersten Werkzeugformhälfte entsprechende Kontur aufweist.

Vorzugsweise ist die Schutzfolie eine PE-Folie. Bei der PE-Folie handelt es sich um eine dünne, flexible, dehnbare Folie.

Eine Anti-Haftbeschichtung kann auf die Schutzfolie aufgebracht werden, um ein Abziehen der Schutzfolie zu erleichtern. Die Anti-Haftbeschichtung kann dabei entweder einseitig oder auf beiden Seiten der Schutzfolie aufgebracht sein.

Bevorzugt wird in die zweite Werkzeugformhälfte vor dem Schäumen eine Folienaußenhaut eingelegt, die die Außenseite des Karosserieanbauteils bildet. Die tiefgezogene Folienaußenhaut ist eine Aluminium- oder Kunststoffolie, wobei letztere z. B. durchgefärbt ist, damit eine Außenlackierung entfallen kann.

Vorzugsweise wird die Folienaußenhaut vor dem Einlegen tiefgezogen.

Das erfindungsgemäße Karosserieanbauteil für ein Fahrzeug, insbesondere Dachmodul, hat eine, bezogen auf den an einem Fahrzeug montierten Zustand, Innenseite, eine entgegengesetzte, sichtbare Außenseite und eine Schutzfolie, wobei die Innenseite einen durch eine Schäumschicht definierten Flächenabschnitt aufweist, an dem die Schutzfolie angeordnet und von dem sie zerstörungsfrei abziehbar ist. Die Schutzfolie schützt den Flächenabschnitt vor Verunreinigungen wie Staub, indem sie diese insbesondere bei einem Transport des fertiggestellten Karosserieanbauteils zu einem Automobilhersteller abdeckt.

Bevorzugt ist, wie gesagt, kein Trennmittel auf die Schutzfolie oder die Schäumform aufgebracht, so daß wenn der Flächenabschnitt z.B. eine Klebefläche ist, ein vorher notwendiges Entfernen des Trennmittels von der Klebefläche vor dem Kontakt mit einem Kleber entfällt.

Weitere Merkmale und Vorteile der Erfindung ergeben sich aus der nachfolgenden Beschreibung und den Zeichnungen. Die Erfindung wird nachfolgend anhand der bevorzugten Ausführungsform beschrieben. In den Zeichnungen zeigen:
- Figur 1 eine perspektivische Ansicht eines erfindungsgemäßen Karosserieanbauteils in Form eines Dachmoduls,
- Figur 2 eine Schnittansicht des geschäumten Dachmoduls, und
- Figur 3 eine Schnittansicht des Schäumwerkzeugs bei eingelegter Schutzfolie und Folienaußenhaut.

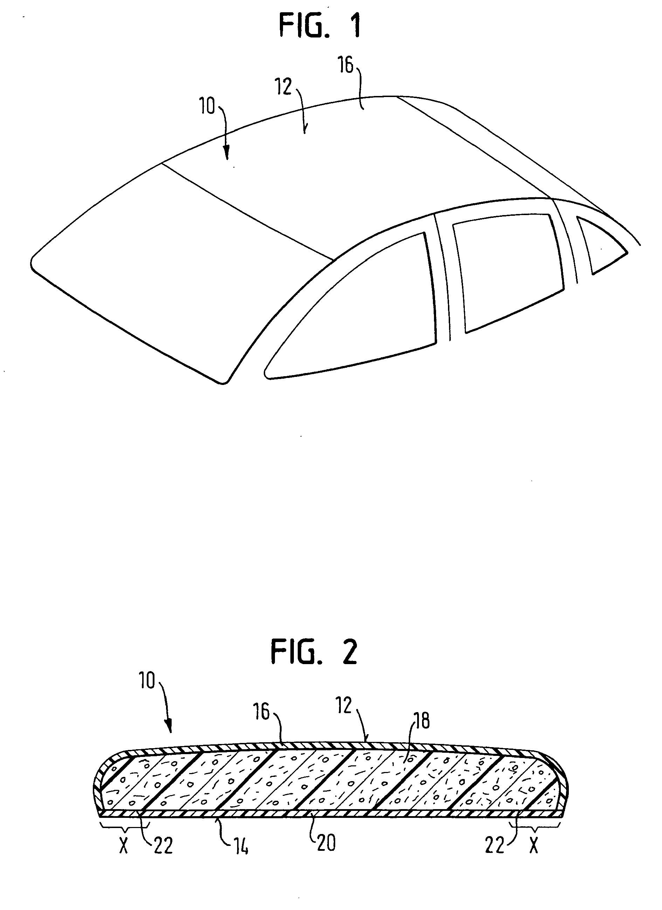

In Figur 1 ist ein Karosserieanbauteil eines Fahrzeugs in Form eines Dachmoduls 10 gezeigt. Anstelle eines Dachmoduls 10 könnte das Karosserieanbauteil z.B. ein Kotflügel, eine Tür oder eine Klappe (Motorhaube, Kofferraumdeckel, Kraftstoffdeckel etc.) des Fahrzeugs sein.

Das geschäumte Dachmodul 10 hat eine im montierten Zustand am Fahrzeug sichtbare Außenseite 12 und eine der Außenseite 12 entgegengesetzte Innenseite 14. Die Außenseite 12 ist durch eine dünne tiefgezogene Folienaußenhaut 16 gebildet, die aus vorzugsweise durchgefärbten Kunststoff oder aus Aluminium besteht.

Unmittelbar an die Folienaußenhaut 16 schließt eine Schäumschicht 18 an, die aus einem faserverstärkten PU-Schaum gebildet ist, wobei die Glasfasern durch das LFI-Verfahren in den Schaum eingebracht werden und dabei die Schäumschicht 18 verstärken. Die Schäumschicht 18 weist in Figur 2 eine nahezu konstante Stärke über die gesamte, gezeigte Länge auf, kann jedoch auch mit verschiedenen Stärken ausgeführt werden.

Über die gesamte Innenseite 14 erstreckt sich eine dünne, flexible PE-Folie 20, die die Innenseite 14 komplett bildet. Die Schutzfolie 20 könnte auch nur in einem Flächenabschnitt angeordnet sein und Klebeflächen 22 (Figur 2) abdecken, die an den seitlichen Rändern im Bereich X des Dachmoduls 10 vorgesehen sind. Die Klebeflächen 22 sind an der Unterseite der Schäumschicht 18 vorgesehen, also unmittelbar unterhalb der Schutzfolie 20 im Bereich X. Auf den Klebeflächen 22 kann ein Kleber aufgebracht werden, um das Dachmodul 10 an dem Fahrzeug, insbesondere am Dachrahmen, durch Kleben zu befestigen. Deswegen ist die Schutzfolie 20 zerstörungsfrei abziehbar, so daß sie vor dem Aufbringen eines Klebers auf die Klebeflächen 22 entfernt wird; bis dahin dient sie als Schutzschicht für die Innenschicht 14 des Dachmoduls 10 vor Verschmutzung, Verunreinigungen, Kratzern etc.

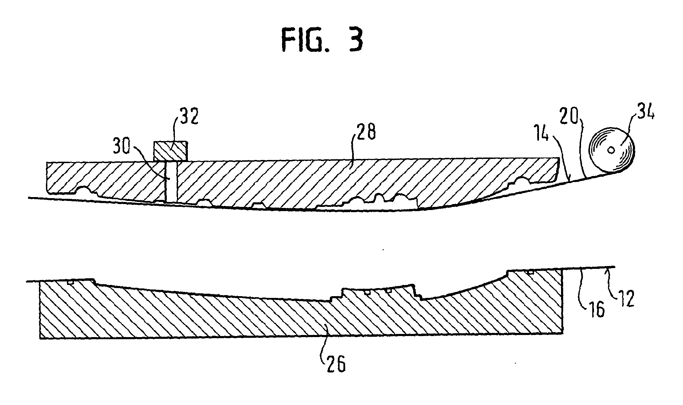

In Figur 3 ist ein Schäumwerkzeug dargestellt, mit dessen Hilfe Karosserieanbauteile wie das eingangs genannte Dachmodul 10, Kotflügel, Türen oder Klappen (Motorhaube, Kofferraumdeckel etc.) des Fahrzeugs hergestellt werden.

Das Schäumwerkzeug umfaßt zwei Werkzeugformhälften, nämlich ein Werkzeugunterteil und ein -oberteil 26, 28, wobei das Werkzeugoberteil 28 eine Bohrung 30 aufweist, die mit einer schematisch gezeigten Pumpe 32 gekoppelt ist, auf deren Funktion im weiteren eingegangen wird. Obwohl hier nur eine Bohrung 30 gezeigt ist, könnten auch mehrere Bohrungen vorgesehen sein.

Beim Verfahren zum Herstellen des geschäumten Dachmoduls 10 wird in das Werkzeugunterteil 26 die tiefgezogene, eigensteife Folienaußenhaut 16, ohne vorheriges Aufbringen eines Trennmittels, eingelegt, wobei die Folienaußenhaut 16 bereits an die Kontur des Werkzeugunterteils 26 angepaßt ist.

Das Werkzeugoberteil 28 wird durch eine von einer stationären Rolle 34 abgerollte, dünne Schutzfolie 20 abgedeckt, ebenfalls ohne daß ein Trennmittel auf das Werkzeugoberteil 28 aufgebracht wird. Die Schutzfolie 20 deckt die gesamte Unterseite des Werkzeugoberteils 28 ab und ist - im Gegensatz zur Folienaußenhaut 16 - nicht an die mit mehreren Vertiefungen versehene Kontur des Werkzeugoberteils 28 angepaßt, sondern nur "locker" eingelegt. Über die Pumpe 32 wird ein Vakuum erzeugt, und die Schutzfolie 20 wird an die Unterseite des Werkzeugoberteils 28 angesaugt.

Bei geöffnetem Schäumwerkzeug wird flüssiges PU-Material rückseitig auf die Folienaußenhaut 16 aufgebracht, wobei Glasfasern mit eingeschossen werden (LFI-Verfahren).

Das Werkzeugunter- und das -oberteil 26, 28 werden zusammengefahren. Das PU-Material schäumt aus und füllt den sich zwischen Werkzeugunter- und -oberteil 26, 28 bildenden Hohlraum aus, der nach dem Schäumen die Schäumschicht 18 bildet.

Nach dem Auseinanderfahren des Werkzeugunter- und -oberteils 26, 28 und dem randseitigem Beschneiden kann das geschäumte Dachmodul 10 mit der Schutzfolie 20 zu einem Automobilhersteller ausgeliefert werden, wobei die Schutzfolie 20 auch bei den weiteren Bearbeitungsvorgängen (z.B. dem randseitigem Beschneiden) als Schutzfolie wirkt und ein Verschmutzen der Klebeflächen 22 verhindert.

Vor dem Anbringen des Dachmoduls 10 an dem Fahrzeug, wird die Schutzfolie 20 von der Schäumschicht 18 abgezogen, ein Kleber auf die Klebeflächen 22 oder den Dachrahmen aufgebracht und das Dachmodul 10 auf dem Dachrahmen des Fahrzeugs aufgeklebt.

Anstatt der Bohrung 30 und der damit verbundenen Pumpe 32 kann sich die Schutzfolie 20 allein aufgrund des Schäumdrucks an die Kontur des Werkzeugoberteils 28 anschmiegen, so daß die Innenseite 14 des geschäumten Dachmoduls 10 die gewünschte Kontur aufweist.

Die gezeigte Schutzfolie 20 schützt die Innenseite 14 des Dachmoduls generell vor Verunreinigungen, Verschmutzungen und Kratzern insbesondere auch bei weiteren Bearbeitungsvorgängen beim Automobilhersteller. Die Schutzfolie 20 kann natürlich als Alternative zu den hier gezeigten seitlichen Klebeflächen 22 auch die gesamte Innenseite 14 oder andere Flächenabschnitte bedecken.

Zusätzlich kann auch ein Innenhimmel in die Schäumform eingelegt werden und zwar auf der der Außenseite 12 zugewandten Seite der Schutzfolie 20. Der Innenhimmel bedeckt dabei nicht die gesamte Innenseite 14, sondern bekannterweise nur den mittleren Bereich. Die Schutzfolie 20 wird dann von dem Innenhimmel zerstörungsfrei abgezogen.

### Bezugszeichenliste

- 10: Dachmodul
- 12: Außenseite
- 14: Innenseite
- 16: Folienaußenhaut
- 18: Schäumschicht
- 20: Schutzfolie
- 22: Klebefläche
- 26: Werkzeugunterteil
- 28: Werkzeugoberteil
- 30: Bohrung
- 32: Pumpe
- 34: Rolle

## Patentansprüche

1. Verfahren zum Herstellen eines Karosserieanbauteils, mit einer, bezogen auf den an einem Fahrzeug montierten Zustand, Innenseite (14) und einer entgegengesetzten, sichtbaren Außenseite (12), wobei die Innenseite (14) einen Flächenabschnitt hat, **gekennzeichnet durch** folgende Schritte:
- es wird eine Schäumform mit einer ersten und einer zweiten Werkzeugformhälfte bereitgestellt, wobei die Innenseite (14) der ersten Werkzeugformhälfte und die Außenseite (12) der zweiten Werkzeugformhälfte zugeordnet sind,
- es wird eine Schutzfolie (20) in die erste Werkzeugfornihälfte wenigstens im Bereich des Flächenabschnitts eingelegt, und
- die Schutzfolie (20) wird hinterschäumt, so daß die Innenseite (14) im Bereich des Flächenabschnitts von der Schutzfolie (20) gebildet wird, wobei die Schutzfolie (20) so mit der erzeugten Schäumschicht (18) verbunden ist, daß sie zerstörungsfrei von dieser abziehbar ist.

2. Verfahren zum Herstellen eines Karosserieanbauteils nach Anspruch 1, **dadurch gekennzeichnet, daß** vor dem Einlegen der Schutzfolie (20) kein Trennmittel auf die erste Werkzeugformhälfte aufgebracht wird.

3. Verfahren zum Herstellen eines Karosserieanbauteils nach Anspruch 1 oder 2, **dadurch gekennzeichnet, daß** beim Schäumvorgang eine Schäumschicht (18) erzeugt wird, wobei die Schutzfolie (20) die gesamte Schäumschicht (18) der ersten Werkzeugfornihälfte innenseitig abdeckt.

4. Verfahren zum Herstellen eines Karosserieanbauteils nach einem der vorhergehenden Ansprüche, **dadurch gekennzeichnet, daß** die erste Werkzeugformhälfte Bohrungen (30) aufweist, die mit einer Pumpe (32) gekoppelt sind, mittels der ein Vakuum aufgebracht werden kann.

5. Verfahren zum Herstellen eines Karosserieanbauteils nach einem der vorhergehenden Ansprüche, **dadurch gekennzeichnet, daß** die Schutzfolie (20) eine PE-Folie ist.

6. Verfahren zum Herstellen eines Karosserieanbauteils nach einem der vorhergehenden Ansprüche, **dadurch gekennzeichnet, daß** eine Anti-Haftbeschichtung auf die Schutzfolie (20) aufgebracht wird.

7. Verfahren zum Herstellen eines Karosserieanbauteils nach einem der vorhergehenden Ansprüche, **dadurch gekennzeichnet, daß** in die zweite Werkzeugformhälfte vor dem Schäumen eine Folienaußenhaut (16) eingelegt wird, die die Außenseite (12) des Karosserieanbauteils bildet.

8. Verfahren zum Herstellen eines Karosserieanbauteils nach Anspruch 8, **dadurch gekennzeichnet, daß** die Folienaußenhaut (16) vor dem Einlegen tiefgezogen wird.

9. Verfahren zum Herstellen eines Karosserieanbauteils nach einem der vorhergehenden Ansprüche, **dadurch gekennzeichnet, daß** wenigstens ein Teil des von der Schutzfolie (20) abgedeckten Flächenabschnitts eine randseitige Klebefläche (22) ist, an der das Karosserieanbauteil am Fahrzeug angeklebt wird.

10. Karosserieanbauteil für ein Fahrzeug, insbesondere Dachmodul, mit einer, bezogen auf den an einem Fahrzeug montierten Zustand, Innenseite (14), einer entgegengesetzten, sichtbaren Außenseite (12) und einer Schutzfolie (20), wobei die Innenseite (14) einen durch eine Schäumschicht (18) definierten Flächenabschnitt hat, an dem die Schutzfolie (20) angeordnet und von dem sie zerstörungsfrei abziehbar ist.

11. Karosserieanbauteil nach Anspruch 10, **dadurch gekennzeichnet, daß** kein Trennmittel auf die Schutzfolie (20) aufgebracht ist.

12. Karosserieanbauteil nach einem der Ansprüche 10 und 11, **dadurch gekennzeichnet, daß** der Flächenabschnitt eine randseitige Klebefläche (22) ist, an der das Karosserieanbauteil am Fahrzeug angeklebt wird.

13. Karosserieanbauteil nach einem der Ansprüche 10 bis 12, **dadurch gekennzeichnet, daß** die Schutzfolie (20) die gesamte Innenseite (14) bildet.
